# EUROPEAN PATENT APPLICATION

(11) **EP 1 669 865 A1**
(43) Date of publication of application: **14.06.2006**
(21) Application number: 04257680.1
(22) Date of filing: 10.12.2004
(51) Int. Cl.: G06F 9/46, H04L 29/06, H04L 12/58

(54) **Message communication over a computer network including a message store**

(71) Applicant: BAE Systems PLC, London SW1Y 5AD (GB)
(72) Inventor: Mantell, Peter Samual, Bristol, BS 34 7QW (GB); Davies, Alan Geraint, Bristol, BS 34 7QW (GB)
(74) Representative: Mukherjee, Aniruddha

(57) **Abstract**

To enable first and second computers with multiple strict firewalls in place to freely exchange data, a third computer is coupled both to the first and second computers by means of outgoing-only connections implementing an HTTP protocol. Messages are stored in a message store of the third computer, and a PHP script in the third computer continuously polls the message store for the existence of messages. If a message is detected, this is detected by the first or second computer, using its OnReceive function, and data transfer takes place. If no message is detected, the PHP script times out, at which point it prompts the first or second computer again queries the third computer, in order to start again the polling process. A thread manages the connection functions in each of the first and second computers.

## Description

### Field of the Invention

This invention relates to computer networks, in particular networks implementing protocols associated with the Internet.

### Background Art

The Internet (implemented by means of the TCP/ IP protocol) is a rapidly developing subject with many applications, programming languages, etc., developed specifically for the Internet. Reference is made to a recent publication, for example, "Computer Networks", Fourth Edition, 2002, Andrew S. Tanenbaum for a review. Unless stated otherwise, an explanation of various well-known acronyms used herein are found in that textbook.

A very important Internet Application is that of the World Wide Web. This uses the transfer protocol known as HTTP (HyperText Transfer Protocol) that specifies what messages clients may send to servers and what responses they get back in return. To connect across the Internet, both client and server provide Connection Sockets for TCP connections. Data transfer may then take place using a defined procedure. To simplify network programming, Microsoft have developed an open networking standard "Windows Sockets: An Open Interface for Network Computing Under Microsoft Windows". Various programming languages have been devised to improve client/ server communication. Web pages are commonly written in HTML (HyperText Markup Language). For dynamic web documents, that are generated on demand, HTML pages may include scripts written in PHP language (Hypertext Preprocessor).

An important issue in using the Internet is security. Most computers, particularly those of business organisations, have Firewalls in place that restrict entry only to those users having approved credentials. A large commercial organisation possessing valuable data may have multiple strict firewalls in place. Such firewalls may only permit outgoing connections to be created from a machine behind the firewall, and will not allow incoming connections to be initiated from outside the firewall. The firewalls around the client may only permit outgoing connections to be initiated via HTTP port 80 (usually used for downloading web pages, etc). Such a circumstance may prevent or restrict use of certain applications, where multiple clients desire to make use of valuable data resources of an Organisation.

US-A-6,789,119 describes a procedure for emulating a so-called persistent connection, using HTTP command language, that may be used where firewalls are in place. However such a procedure requires a significant part of the capacity of the communication link.

### Summary of the Invention

It is an object of the invention to provide a method and means of efficiently transferring data in an application between first and second computers that may have firewalls in place.

It is a feature of the invention to provide a means of traversing firewalls in an acceptable manner, such that applications developed using sockets can easily and transparently be modified to operate through firewalls.

In a first aspect, the invention provides a computer network comprising a first computer that may have a first firewall, a second computer that may have a second firewall, and a third computer, having a message store, coupled both to the first and second computer by means of respective first and second outgoing-only connections from the first and second computers (implementing an HTTP protocol), whereby communication is established between the first and second computers by placing messages via said connections in the message store of the third computer.

In a second aspect, the invention provides, in a computer network comprising a first computer and a second computer, a method for establishing communication between the first and second computers, comprising:
providing a third computer;
making respective first and second outgoing-only connections (by means of an HTTP protocol) from the first computer to the third computer, and from the second computer to the third computer;
and establishing communication between the first and second computers by placement of messages via said first and second connections in the third computer.

In accordance with the invention, the first and second computers may communicate by means of outgoing-only connections, so that firewalls around the computers will not affect communication. The third computer will be positioned outside the firewalls. As preferred, the third computer contains a script written in PHP (or other appropriate language) that continually polls for messages placed in the message store by the first and second computers, to alert the intended recipient. This has proved a highly efficient way of controlling the communication process, since the alerting process does not require extensive network traffic.

Further, the connection process at each of the first and second computers is preferably managed by a thread (a thread is a semi-process that has its own stack, but not its own memory allocation, and executes a given piece of code). The thread sends a request to the third computer, asking for any messages. This triggers the PHP script to poll for a period of time corresponding to the firewall timeout control (e.g. 20 seconds). If messages exist, this is detected by means of the OnReceive() function of the computer. If none are received, the thread retriggers the message request, to retrigger the PHP script. This is to mimic the behaviour of the Windows™ sockets programming model where, without a thread, incoming TCP/IP packets will trigger an operating system interrupt that is received by a Windows™ Sockets layer, which in turn translates it into an application event in a Microsoft MFC programming model, or the equivalent action for a Unix operating system. The use of threads implies that the computer application is actively seeking out data from the third computer rather than being notified with interrupts. The use of threads permits the invention to be compatible with existing system architecture (e.g. MFC event architecture).

To enable transfer of binary data, the messages being sent are encoded into a textual form by the first computer and decoded by the third computer. This is due to restrictions in the acceptable format of HTTP messages.

The present invention is well adapted for use in a network comprising a large number of computers that may wish to communicate with each other.

### Brief Description of the Drawings

A preferred embodiment of the invention will now be described with reference to the accompanying drawings, wherein
Figure 1 is a schematic block diagram of the preferred embodiment; and
Figure 2 is a diagram indicating the sequence of actions in the HTTP protocol for establishing communication between the server and client of Fig. 1.

### Description of the Preferred Embodiment

A known arrangement for a typical networked application in which data is transferred from a server archive to a client application is by constructing sockets in an appropriate protocol. This programming model works well within a network. As each application sends data to the other, respective functions are signalled to let the applications know that there are data to be read. The problem arises when multiple strict firewalls are placed between the elements of the network. The firewall around the server application will not allow a client outside the firewall to seek a connection from the server. The firewall around the client will only allow a connection to be initiated via port 80, the http port.

At least in a preferred embodiment, the present invention "replaces" the above connection process and manages the connection process. It is recognised that most organisations these days have basic web browsing capability on their desktops. So a mechanism based around HTTP and secure HTTP can easily be deployed without intrusive firewall configuration. However, the basic requirement of only using outgoing traffic is adhered to. The invention provides a method of communicating between machines, using standard network protocols and ports, i.e. HTTP, HTTPS. The architecture integrates easily with the existing socket-based code to ease migration.

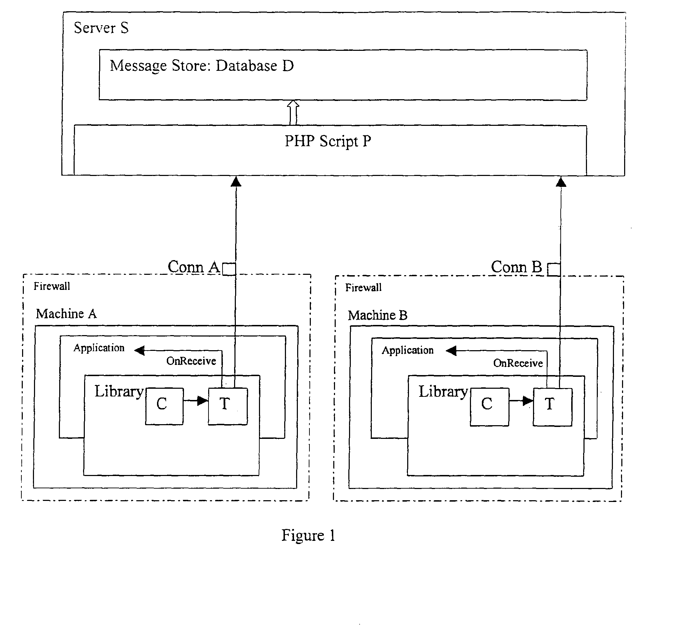

In the preferred embodiment, it is assumed all machines are behind equally restrictive firewalls. This means a symmetric architecture is necessary whereby no client machine also has to act as a server. A third party is introduced; a "machine in the middle" that acts as a server, ferrying data between the two clients. This is schematically illustrated in the block diagram of Figure 1. Data is passed from Machine A to Machine B via the Server S in the middle. The "outgoing-only" nature of the firewalls means incoming message events cannot be sent to a client machine (B). Instead, it becomes the client machine's (B's) responsibility to interrogate the server S and ascertain whether there is any data waiting for it. A Message Store or database D in the Server stores messages from Machine A until Machine B picks them up. "Sockets" on both machines are assigned unique identifiers to ensure a message gets routed correctly from source to destination. Server S has a PHP script P that manipulates or queries the database D in a manner according to the parameters passed to it. Script P may alternatively be written in any suitable language, for example Java or ASP, or even the equivalent functionality may be provided directly in hardware.

In more detail, referring to Figure 1, a client application in Machine A initiates a virtual connection C to machine B by sending a message over HTTP to the server S, giving the IP address of machine B and a port number as parameters. This is stored in database D by PHP script P. A connect function ConnB, in a library L of functions on machine B, retrieves this message from the server S using another HTTP request. The connect function ConnB gives the socket a unique ID, timestamp (for ordering a sequence of messages) and also the name of the receiving application/machine B.

The application on machine B then connects to the server S via HTTP, posting a message to database D to notify A that the virtual connection has been accepted. A connect function ConnA on machine A, intercepts this. The applications on machines A and B have the standard functions associated with a socket e.g. OnReceive(), Receive(), Send() etc. The OnReceive is particularly important, as it is this listening function that signals that a message is available for collection; this function is triggered by a thread that constantly checks for data by transparently sending a request to the server S asking for any messages. This triggers PHP page P within server S to continuously poll and query database D for any messages for that particular application. If none are available within 20 seconds (as determined by the time-out of the firewall surrounding machine B), page P returns a code to B, triggering machine B to resend a request, thus effectively keeping the connection alive. If a message is detected by PHP page P, then machine B is notified by means of its OnReceive() function. The message is recovered from the database D in the correct time order (if the message is made up of several parts) by page P, returned to the destination application on machine B by means of appropriate Receive functions, and removed from the DB. The messages can be in any data form - e.g. binary data, images, and of any of the commonly used file types. The data may be encrypted.

The location and IP address of S can either be hidden or made selectable. Note that HTTPS i.e. secure comms can also be used. Server S is a low value stand-alone device and although still protected by a firewall, it has been configured to allow a server to run.

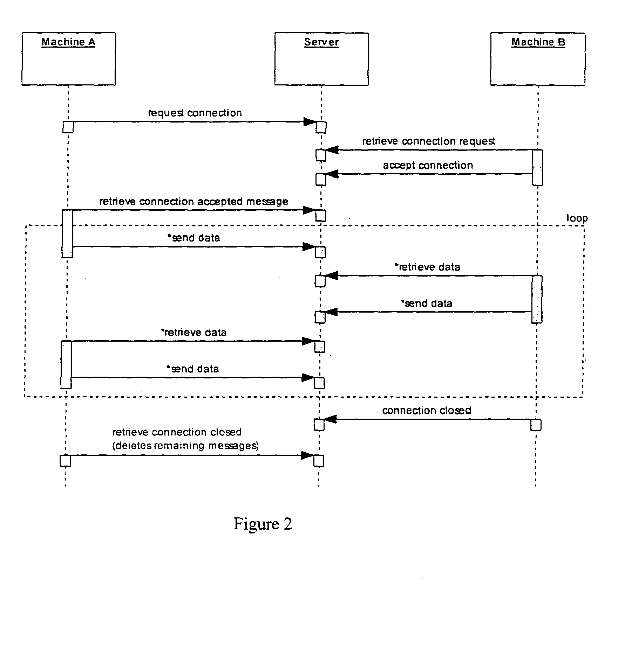

As shown in Figure 2, The communication for Machine A to connect to Machine B can be split into three classes of messages:
1). Connection request
2). Connection status messages (accept, deny, close)
3). Data messages
   The message store in server S is implemented as a database B with three tables, one per class of message. For 1) and 2), there is an initialisation procedure shown in Figure 2 as *request connection, retrieve connection request,* and *accept connection* and *retrieve connection accepted message.* Thus machine A creates a socket and sends a message identifying itself, and machine B as the machine it wants to connect to; this message is stored in a first table of database D. Machine B creates a socket, that is arranged to retrieve a connection request that is generated within database D of server S. Machine B may then accept the connection, generating a new socket with identity of Machine A, and this is posted to a second table of database D. Machine A retrieves the acceptance.

Data messages 3) may then be transmitted and stored in the third table of database D, as an iterative procedure as shown in Figure 2, *send data* (A), *retrieve data* (B), *send data* (B), *retrieve data* (A), *send data* (A), etc. In this both machine B and machine A generate OnReceive functions that continually listen to the socket and retrieve data by means of further Receive functions.

Finally, there is a sequence 2) of close messages, *connection closed, retrieve connection closed,* that are posted to the second table of database D

The above sequence of messages was designed to fit in with socket models of known type , for example open-plan networking schemes such as the Microsoft Foundation Classes (MFC) library using the CSocket and CSocketFile classes, or their Unix equivalents. Selection of either a direct TCP/IP socket or an HTTP Socket is done via a Boolean variable in the constructor.

If machine A and machine B have different data formats, then any translation necessary can take place within server S when messages are retrieved and sent to machine B.

The present invention realises that continual polling to check for the presence of messages or connection requests may cause a lot of unnecessary network traffic. By performing polling loops within the server S, network traffic is reduced and hence the achievable transmission rate is increased, since only a few bytes are transferred every 20 seconds as a trigger signal.

In accordance with the invention, multiple client/ server connections can be generated, and server S maintains the connections, i.e. "persistent" connections in a "connectionless" environment. Network failure can be tolerated in as much as messages stored in server S are available for future download.

The big advantage of the invention is that multiple strong firewalls can be in place only allowing outgoing connections, and applications can still connect and pass information in a legitimate, controlled and transparent way. By having a communications library handle the processes described above, any application that normally communicates via sockets and work within a LAN can be extended to work via multiple firewalls by simply linking with the supplied library.

Thus the invention provides a means of networking that enables the collaborative working. A technology that can tunnel through the firewalls in a standard fashion that is acceptable from a security point of view is provided so that any new users do not need to modify their firewall settings. Secure HTTP provides sufficient security. This uses SSL, another protocol frequently used on the Internet. SSL provides not only secure data transfer but also client authentication, ensuring that only trusted individuals can successfully connect to networks.

## Claims

1. A computer network comprising a first computer, a second computer, and a third computer, having a message store, the third computer being coupled both to the first and second computer by means of respective first and second outgoing-only connections from the first and second computers, whereby communication is established between the first and second computers by placing messages via said connections in the message store of the third computer.

2. A network according to claim 1, wherein said connections each implement an HTTP protocol.

3. A network according to claim 1 or 2, wherein each of the first and second computers have respective firewalls, and the third computer is positioned outside said firewalls.

4. A network according to claim 1, 2 or 3, wherein said first and second computers each have a socket connection function for sending messages to said third computer comprising information and an indication of the intended recipient.

5. A network according to claim 4, wherein said first and second computers each have a thread for managing said socket connection.

6. A network according to any preceding claim, wherein the third computer includes polling means for polling the message store, and for detecting messages therein, and the intended recipient.

7. A network according to claim 6, wherein each of the first and second computers includes a function for listening across the respective connection, and for detecting an indication from the polling means that a message is available for collection, whereupon a transfer is initiated of information in the message.

8. A network according to claim 6 or 7, wherein the polling means is arranged to be operative for a predetermined period, and then to signal the first or second computer for a message query that will trigger further operation of the polling means.

9. In a computer network comprising a first computer and a second computer, a method for establishing communication between the first and second computers, comprising:
providing a third computer;
making respective first and second outgoing-only connections from the first computer to the third computer, and from the second computer to the third computer;
and establishing communication between the first and second computers by placement of messages via said first and second connections in the third computer.

10. A method according to claim 9, wherein, upon receipt of a request from the first or second computer for a message, the third computer polls the message store, for detecting messages therein, and the intended recipient.

11. A method according to claim 10, wherein each of the first and second computers listens across the respective connection, for detecting an indication from the third computer that a message is available for collection, whereupon information in the message is transferred.

12. A method according to claim 10 or 11, wherein the poll is operative for a predetermined period, and then the third computer signals the first or second computer to initiate a message query that will trigger a further cycle of the poll.
